# EUROPÄISCHE PATENTSCHRIFT

(11) **EP 0 564 436 B1**
(45) Veröffentlichungstag und Bekanntmachung des Hinweises auf die Patenterteilung: **24.01.1996**
(21) Anmeldenummer: 93890051.1
(22) Anmeldetag: 23.03.1993
(51) Int. Cl.: F16G 3/02, D21F 1/00

(54) **Einrichtung zum lösbaren Verbinden von textilen Gurten, Bändern, Endlossieben od.dgl.**
Releasable joining device for textile belts, bands, endless sifting bands or the like
Dispositif de raccordement amaible de courroies textiles, de bandes, de bandes de tamisage sans fin ou analogues

(30) Priorität: 30.03.1992 AT 636/92
(43) Veröffentlichungstag der Anmeldung: 06.10.1993
(73) Patentinhaber: HUYCK-AUSTRIA GESELLSCHAFT M.B.H., A-2640 Gloggnitz (AT)
(72) Erfinder: Berger, Friedrich, A-2640 Gloggnitz (AT)
(74) Vertreter: Matschnig, Franz, Dipl.-Ing.

(56) Entgegenhaltungen:
- DE-A- 2 059 021
- DE-A- 2 338 263
- DE-B- 1 135 394
- DE-C- 281 072
- FR-A- 2 145 365
- FR-A- 2 250 047
- US-A- 1 444 301
- US-A- 3 546 054
- US-A- 4 344 209
- US-A- 4 574 435

## Beschreibung

Die Erfindung bezieht sich auf eine Einrichtung zum lösbaren Verbinden von textilen Gurten, Bändern, Endlossieben od. dgl., bei welcher an den Stirnkanten der Gurtenden zwei ineinander schiebbare Schraubenwendeln mittels einer jede einzelne Wendelwindung erfassende Naht befestigt sind und die Schraubenwendeln mittels eines einschiebbaren Steckdrahtes, -stiftes od. dgl. zusammenhängbar sind.

Eine Einrichtung der oben genannten Art geht aus der bereits 1914 veröffentlichten DE-C-281 072 hervor. Darin ist eine Einrichtung zum Verbinden eines Metalltuches für Papiermaschinen geoffenbart, bei welcher an der Stirnseite des Metalltuches je eine schraubenförmige Drahtspule mittels eines Feindrahtes befestigt ist, der händisch in das Metalltuch eingefädelt ist und jede Windung der Drahtspule erfaßt. Diese Feindrahtfädelung kann unter Umständen als eine Naht bezeichnet werden. Bei einer Ausführungsform sind zwei Drahtspulen mit gegengleichem Windungssinn vorgesehen, die, wenn sie seitlich ineinander geschoben sind, mittels eines Steckstabes verbunden werden können. Die Form der Drahtspulen ist nicht näher beschrieben, muß jedoch zwangsläufig einen kreisförmigen Querschnitt aufweisen, da nur dann das in der Figur dargestellte ineinander Einfädeln der Drahtspulen möglich ist. Eine Einrichtung dieser Art ist jedoch aufwendig herzustellen, da die Feindrähte händisch in das Metalltuch eingefädelt werden müssen, um ein stirnseitiges Anordnen der Drahtspulen zu ermöglichen.

Weiters ist aus der FR-A-2 145 365 eine Einrichtung zum Verbinden von Enden eines textilen Gewebes, insbesondere zur Herstellung eines Endlosbandes für Papiermaschinen bekannt geworden. Bei dieser Einrichtung ist an dem Ende des zu verbindenden Gewebebandes seitlich je ein weiteres Gewebestück befestigt, welches über die Kante des Gewebebandes vorsteht und an welchem seitlich je eine Schraubenwendel mittels einer Naht angenäht ist. Über die Herstellung der Naht werden keine näheren Angaben gemacht. Die in der Figur 8 dargestellte, gerade Naht könnte jedoch aus der Sicht eines Fachmannes maschinell hergestellt sein. Ein Nachteil dieser Vorrichtung liegt unter anderem darin, daß ein zusätzliches Gewebestück erforderlich ist, wodurch die Herstellungskosten ebenso erhöht werden. Durch das seitliche Anbringen des Gewebestückes an dem Gewebeband bzw. der Schraubenwendeln an dem Gewebestück entsteht überdies im Verbindungsbereich eine unerwünschte Vergrößerung der Dicke dieser Einrichtung..

Zum lösbaren Verbinden von Gurten, wie Fördergurten, Endlossieben, Riemen, etc. sind noch eine Anzahl weiterer Einrichtungen bekannt geworden.

So ist es aus der US-PS 4 344 209 bekannt geworden, in textile Saumbänder U-förmige Drahthäkchen mit ihren umgebogenen, scharfen Schenkelenden parallel zueinander einzupressen. Die Saumbänder besitzen eine Aufnahmetasche, in welche die Enden eines Siebes eingeschoben und mit den Saumbändern vernäht werden. Die von den Drahthäkchen gebildeten Ösen an beiden Enden des Siebes werden ineinandergeschoben und mittels eines einschiebbaren Drahtes lösbar miteinander verbunden. Die Herstellung dieser Verbindungsvorrichtung ist äußerst aufwendig und teuer und erfordert zusätzliche Saumbänder.

Bei einer aus der DE-AS 20 59 021 bekannt gewordenen Einrichtung werden Schraubenwendeln verwendet und mit gewebten Tragbandlappen verbunden, welche ihrerseits durch Nähen an Fördergurtenden befestigt werden. Zur Verbindung der Schraubenwendeln mit den Tragbandlappen werden bei letzteren Schußfädenschlaufen freigelegt und die Wendeln werden in diese Schlaufen eingeführt. Dieser Vorgang ist äußerst arbeitsintensiv und daher teuer und bringt eine wesentliche Verdickung und Versteifung der Bandenden mit sich.

Wie die DE-PS 23 38 263 zeigt, können an den Enden von Gurten auch Schlaufen von zurückgeschlagenen, in die Gurtenden eingespleißten Kettfäden gebildet werden, und solche Schlaufen an den Enden eines Gurtes können mittels Verbindungsstäben miteinander verhängt werden. Auch diese bekannte Verbindungsvorrichtung ist sehr teuer in der Herstellung und überdies nur bei bestimmten Gewebearten anwendbar.

Es ist eine Aufgabe der Erfindung, eine Verbindungseinrichtung für textile Gurten, Endlossiebe od. dgl. zu schaffen, die trotz einfacher und kostengünstiger Herstellung eine feste Verbindung beispielsweise bei Sieben in Entwässerungsmaschinen ermöglicht, wobei im Verbindungsbereich die Verdickung minimal sein, die Flexibilität hingegen möglichst nahe an jene des Siebes oder Gurtes herankommen soll.

Diese Aufgabe wird mit einer Einrichtung der eingangs genannten Art gelöst, bei welcher erfindungsgemäß die Schraubenwendeln im wesentlichen elliptisch sind und der Steckdraht einen flachen, z.B. elliptischen Querschnitt aufweist, und bei welcher die Naht eine maschinell gefertigte Zickzack- oder Überwendlichnaht ist.

Das erfindungsgemäße, stirnseitige Annähen der Schraubenwendeln an die Gurt- bzw. Bandenden führt nicht nur zu einer wesentlich billigeren Herstellung, sondern erhöht auch die Flexibilität im Verbindungsbereich, zumal dieser Bereich dank der Erfindung schmäler ausfällt, als bei den eingangs beschriebenen, bekannten Einrichtungen. Weiters kann durch die elliptische Form der Schraubenwendeln und des Steckdrahtes eine entsprechend flache und dennoch feste Verbindung zwischen den Gurtenden realisiert werden, ohne auf die gewünschte Elastizität verzichten zu müssen.

Zweckmäßigerweise ist die Naht aus einem synthetischen Multifilamentgarn hergestellt.

Um die Naht zu sichern und im Betrieb zu schonen, kann sie an dem Gurtende mittels einer Kunststoffschicht abgedeckt sein.

Die Schraubenwendeln bestehen zweckmäßigerweise aus synthetischem Kunststoff oder aus kunststoffbeschichtetem Metalldraht, der textile Gurt aus synthetischem Kunststoff.

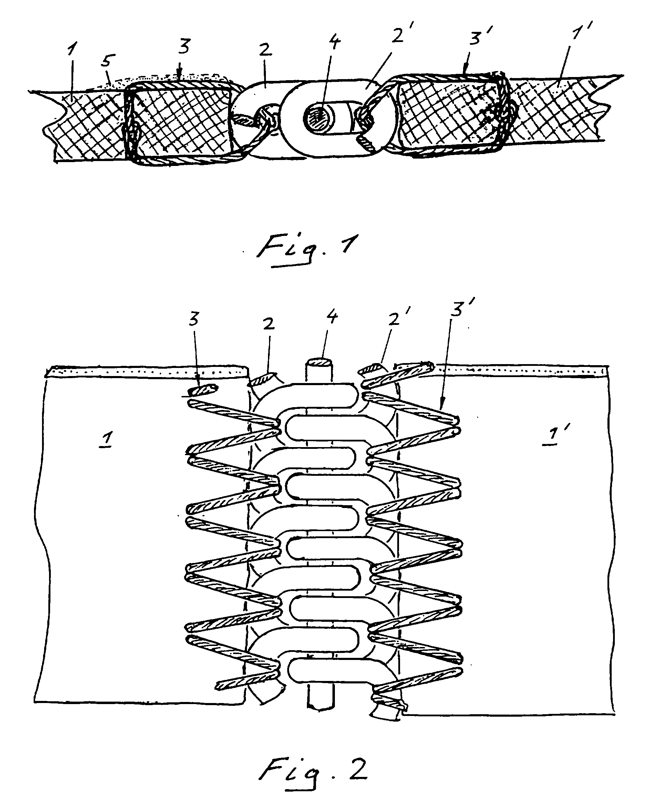

Die Erfindung samt weiterer Vorteile ist im folgenden an Hand eines Ausführungsbeispiels näher erläutert, das in der Zeichnung veranschaulicht ist. In dieser zeigen Fig. 1 in schematischem Querschnitt die Enden zweier textiler Gurte, die mittels einer Einrichtung nach der Erfindung miteinander verbunden sind und Fig. 2 eine dazugehörige Draufsicht.

In den Fig. 1 und 2 sind zwei Enden eines textilen Gurtes 1, 1' gezeigt, die miteinander verbunden werden sollen. Bei dem Gurt 1, 1' kann es sich beispielsweise um ein Siebband für Entwässerungsmaschinen od.dgl. handeln, doch ist die Erfindung nicht darauf beschränkt.

An den Stirnseiten des Gurtes 1, 1' liegen Schraubenwendeln 2, 2', die etwa elliptische Form besitzen, mit ihren Bugen an und sind mit dem Gurt 1, 1' je durch eine Zick-Zacknaht 3, 3' verbunden, die jede einzelne Wendelwindung an dem nahe gelegenen Bug umfaßt. An Stelle einer Zick-Zacknaht können auch andere Nahttypen verwendet werden, vorteilhafterweise eine sogenannte "Überwendlichnaht", bei welcher die Stirnseiten der Gurten gleichzeitig eingeendelt sind.

Die beiden Wendeln 2, 2' können in der dargestellten Weise ineinandergeschoben und sodann mittels eines Steckdrahtes 4, der in die zusammengeschobenen Wendeln 2, 2' eingeschoben wird, zusammengehängt werden.

In der Zeichnung ist ein Steckdraht 4 mit kreisrundem Querschnitt gezeigt, doch ist es in vielen Fällen vorteilhaft, einen Steckdraht mit flachem, z.B. elliptischen Querschnitt zu verwenden.

Das für die Naht verwendete Garn ist z.B. ein synthetisches Multifilamentgarn. Die Schraubenwendeln können aus Kunststoff oder aus kunststoffbeschichtetem Metall-, insbesondere Stahldraht bestehen. Der textile Gurt kann gleichfalls aus synthetischem Kunststoff hergestellt sein.

Die Naht 3, 3' wird in vielen Fällen mit Vorteil von einer Kunststoffschicht 5 im Endbereich des Gurtes 1 abgedeckt, was in Fig. 1 strichliert angedeutet ist. Eine solche Schicht 5 erstreckt sich auch zwischen die Fäden der Naht 3 und unterbindet nicht nur ein Scheuern der Fäden am Gurt sondern schützt die Naht 3 auch vor äußeren Einflüssen, insbesondere vor Abrieb.

## Patentansprüche

1. Einrichtung zum lösbaren Verbinden von textilen Gurten (1, 1'), Bändern, Endlossieben od. dgl., bei welcher an den Stirnkanten der Gurtenden zwei ineinander schiebbare Schraubenwendeln (2, 2') mittels einer jede einzelne Wendelwindung erfassende Naht (3, 3') befestigt sind und die Schraubenwendeln (2, 2') mittels eines einschiebbaren Steckdrahtes (4), - stiftes od. dgl. zusammenhängbar sind, **dadurch gekennzeichnet, daß** die Schraubenwendeln im wesentlichen elliptisch sind und der Steckdraht einen flachen, z.B. elliptischen Querschnitt aufweist, **und daß** die Naht eine maschinell gefertigte Zickzack- oder Überwendlichnaht ist.

2. Einrichtung nach Anspruch 1, **dadurch gekennzeichnet, daß** die Naht (3, 3') aus einem synthetischen Multifilamentgarn hergestellt ist.

3. Einrichtung nach Anspruch 1 oder 2,**dadurch gekennzeichnet, daß** daß die Naht (3, 3') an dem Gurtende mittels einer Kunststoffschicht abgedeckt ist.

4. Einrichtung nach einem der Ansprüche 1 bis 3, **dadurch gekennzeichnet, daß** die Schraubenwendeln (2, 2') und der Gurt (1, 1') aus synthetischem Kunststoff bestehen.

5. Einrichtung nach einem der Ansprüche 1 bis 3, **dadurch gekennzeichnet, daß** die Schraubenwendeln (2, 2') aus kunststoffbeschichteten Metalldraht bestehen.

## Claims

1. Device for releasably connecting textile belts (1, 1'), bands, endless screens or the like, in which at the end edges of the belt ends two helical coils (2, 2'), which can be pushed into each other, are fixed by means of a seam (3, 3') catching each individual coil winding and the helical coils (2, 2') can be linked together by means of an insert wire (4), rod or the like which can be pushed in, characterised in that the helical coils are substantially elliptical and the insert wire has a flat, for example, elliptical cross-section, and that the seam is a machine-made zig-zag or overcast seam.

2. Device according to claim 1, characterised in that the seam (3', 3') is produced from a synthetic multi-filament yarn.

3. Device according to claim 1 or 2, characterised in that the seam (3, 3') at the belt ends is covered by a synthetic material coating.

4. Device according to one of claims 1 to 3, characterised in that the helical coils (2, 2') and the belt (1, 1') consist of synthetic material.

5. Device according to one of claims 1 to 3, characterised in that the helical coils (2, 2') consist of metal wire coated with synthetic material.

## Revendications

1. Dispositif pour relier de façon amovible des ceintures textiles (1,1'), des bandes, des bandes de tamis sans fin ou analogues, dans lequel deux filaments hélicoïdaux (2,2') pouvant être repoussés l'un dans l'autre sont fixés aux bords frontaux des extrémités de la ceinture au moyen d'une couture (3,3') enserrant chaque spire individuelle du filament, et les filaments hélicoïdaux (2,2') peuvent être réunis au moyen d'un fil enfichable (4), d'une tige enfichable ou analogue, qui peut être inséré, caractérisé en ce que les filaments hélicoïdaux sont sensiblement elliptiques et le fil d'enfichage possède une section transversale plate, par exemple elliptique, et que la couture est une couture zig-zag ou une couture à surjet formée mécaniquement.

2. Dispositif selon la revendication 1, caractérisé en ce que la couture (3,3') est constituée par un fil synthétique à filaments multiples.

3. Dispositif selon la revendication 1 ou 2, caractérisé en ce que la couture (3,3') est recouverte à l'extrémité de la ceinture au moyen d'une couche de matière plastique.

4. Dispositif selon l'une des revendications 1 à 3, caractérisé en ce que les filaments hélicoïdaux (2,2') et la ceinture (1,1') sont réalisés en une matière plastique synthétique.

5. Dispositif selon l'une des revendications 1 à 3, caractérisé en ce que les filaments hélicoïdaux (2,2') sont réalisés en un fil métallique recouvert d'une matière plastique.
